# FASCICULE DE BREVET EUROPEEN

(11) **EP 0 572 296 B1**
(45) Date de publication et mention de la délivrance du brevet: **20.08.1997**
(21) Numéro de dépôt: 93401198.2
(22) Date de dépôt: 11.05.1993
(51) Int. Cl.: F16B 13/14

(54) **Système de scellement chimique d'un élément de fixation dans un matériau creux**
System zum chemischen Einmauern von einem Befestigungselement in einem hohlen Material
System for the chemical sealing of or fastening element in a hollow material

(30) Priorité: 27.05.1992 FR 9206499
(43) Date de publication de la demande: 01.12.1993
(73) Titulaire: SOCIETE DE PROSPECTION ET D'INVENTIONS TECHNIQUES SPIT, F-26501 Bourg-Les-Valence Cédex (FR)
(72) Inventeur: Barthomeuf, Jean Paul, 26300 Bourg de Peage (FR); Gauthier, Alain, 07300 Saint Jean de Muzols (FR)
(74) Mandataire: Bloch, Gérard

(56) Documents cités:
- EP-A- 0 287 505
- DE-A- 3 325 800
- DE-B- 2 723 729
- FR-A- 2 200 917
- FR-A- 2 291 394
- GB-A- 1 340 117

## Description

Un système classique de scellement chimique d'un élément de fixation dans un matériau creux, telle une brique, comporte un tamis destiné à s'étendre à travers au moins un orifice percé dans la paroi extérieure du matériau, de préférence à travers un deuxième orifice percé dans la première paroi intérieure, et à recevoir d'abord un mortier de résine durcissable puis l'élément de fixation, avec son extrémité de fixation - mâle, femelle ou en forme de gond, par exemple - en saillie hors de la paroi extérieure du matériau. Lors de l'introduction de l'élément de fixation dans le tamis, le mortier de résine est en partie chassé à travers le tamis pour, après durcissement, sceller l'élément de fixation à l'arrière de la paroi extérieure du matériau, éventuellement aussi dans le ou les orifices des parois du matériau.

Si la paroi extérieure et la première paroi intérieure sont assez écartées l'une de l'autre et ménagent entre elles un alvéole volumineux, le mortier de résine se répand dans l'alvéole au détriment de la solidité du scellement. Si l'épaisseur de la paroi extérieure du matériau est trop faible, l'orifice de cette paroi peut constituer un pivot pour l'élément de fixation dont le positionnement à la surface extérieure du matériau peut ne pas être correct, sans parler de la fragilisation du scellement.

La présente invention vise à pallier ces inconvénients et à contrôler l'injection de mortier à l'arrière de la paroi extérieure et à la concentrer sur la plus grande surface possible de cette paroi extérieure pour finalement assurer un scellement de grande solidité et un parfait positionnement de l'élément de fixation.

On a déjà proposé, dans le document EP-A-0394189, un système de scellement chimique d'un élément de fixation dans un matériau creux à paroi extérieure, comprenant une gaine enveloppe à conformation variable montée sur une douille à taraudage intérieur pour recevoir l'élément de fixation, la gaine étant agencée pour, dans un état reployé, traverser un orifice percé dans la paroi extérieure du matériau et, au-delà de l'orifice, dans une position de scellement et dans un état déployé, envelopper un mortier de résine durcissable.

Le système de ce document, s'il permet de concentrer relativement correctement le mortier de résine à l'arrière de la paroi extérieure du matériau récepteur, n'assure toutefois pas une surface de contact maximale du mortier sur la face intérieure de la paroi extérieure, en raison de la constitution de la gaine-enveloppe en forme de poche fermée. En outre, et pour cette raison, des orifices d'écoulement du mortier doivent être pratiqués dans les parois de cette poche. Enfin, sa fixation, tant à la douille qu'à un manchon de déploiement pose quelques difficultés de fabrication.

La demanderesse a donc voulu proposer un système de scellement chimique de fabrication simple et assurant un scellement à la paroi extérieure du matériau creux récepteur de surface vraiment optimale.

Ainsi, la présente invention concerne un système du type mentionné ci-dessus, caractérisé par le fait que la gaine-enveloppe est agencée pour se déployer à l'état de repos élastiquement et, en position de scellement, être évasée vers la paroi extérieure et en butée contre sa face intérieure sous l'action de moyens de rappel solidaires de la douille et de moyens d'appui contre la face extérieure de la paroi extérieure, solidaires des moyens de rappel.

DE-A-3 325 800 enseigne un système de scellement chimique à gaine-enveloppe déployable. Mais dans ce système, il n'est pas prévu de moyens d'appui et il est très difficille de l'utiliser pour des matériaux creux du type brique. Même si on le souhaitait, la surface de contact du mortier ne serait pas suffisamment grande. En outre, ce système antérieur ne pourrait pas être utilisé pour des parois d'épaisseurs différentes par manque de moyens d'appui solidaires de moyens de rappel.

L'élément de fixation à sceller peut être soit une tige filetée, c'est-à-dire un élément mâle, soit la douille de montage de la gaine-enveloppe elle-même, c'est-à-dire un élément femelle destiné à recevoir une vis de fixation.

Dans le premier cas, et la tige filetée étant vissée dans la douille, les moyens d'appui contre la face extérieure de la paroi extérieure peuvent comporter une collerette pourvue d'une lumière de passage d'un embout d'injection de mortier de résine.

Dans le second cas, le système peut être associé à un embout tubulaire agencé pour être provisoirement vissé dans la douille, positionner le système dans le matériau, assurer l'injection de mortier de résine, protéger une portion intérieure de la douille destinée à recevoir la vis de fixation et dégager le mortier de résine durci de la douille.

Dans un cas comme dans l'autre, les moyens d'appui contre la face extérieure de la paroi extérieure peuvent comporter au moins une spire d'extrémité élargie d'un ressort fixé, à son autre extrémité, à la douille.

Si on compare maintenant le système de l'invention avec, par exemple, le système de fixation du document FR-A-1524897, on peut déceler une certaine analogie structurelle entre le "parapluie" de fixation de cet ancien système et la gaine-enveloppe de l'invention.

Mais au plan fonctionnel, les deux moyens n'ont rien de commun. L'élément de fixation du système de l'art antérieur est primordial pour plaquer le parapluie contre la face intérieure de la paroi extérieure. En fait, c'est le parapluie qui est indispensable pour tenir l'élément de fixation par vissage. Quant à la gaine-enveloppe de l'invention, elle n'a pas besoin de l'élément de fixation pour être plaquée en position de scellement, sa fonction étant de contenir provisoirement le mortier de résine avant qu'il ne durcisse. L'emploi pur et simple du parapluie du document FR-A-1524897 sur un tamis de scellement chimique classique, ou en remplacement de la poche du document EP-A-0394189, pour autant que cela fut envisageable, ne pouvait certainement pas permettre de reconstituer le système de l'invention.

L'enseignement du document FR-A-2200917 n'était pas davantage utilisable pour modifier le système du document EP-A-0394189 et reconstituer celui de l'invention, dès lors que, dans l'une des formes de réalisation, celle des deux pièces du système de FR-A-2200917, assimilable, difficilement, à un parapluie monté sur douille (écrou), est comparable, fonctionnellement, au parapluie du système de FR-A-1524897 et que l'autre des deux pièces, si elle comporte bien, d'un côté, un manchon en forme de ressort, elle ne comporte, de l'autre côté, qu'un manchon pour coulisser sur la première pièce. Quant aux autres formes de réalisation (figures 6-9), enseignées par le document FR-A-2200917, qui, apparemment, pourraient davantage encore ressembler au système de l'invention, il est exclu de considérer qu'elles puissent comporter un "parapluie" de scellement compte-tenu du niveau de liaison des ailettes de fixation de la pièce montée sur écrou aux barrettes du manchon hélicoïdal. De toutes façons, le déploiement des ailettes des différents systèmes de FR-A-2200917 ne s'effectue ni à l'état de repos, ni élastiquement.

On retrouve encore un soi-disant parapluie dans le système d'ancrage d'un élément de tension du document US-A-4501516. Dans ce cas, le parapluie est fixé à l'élément de tension ; il est prévu ni pour recevoir une tige filetée ou une vis de fixation ni pour contenir mais pour retenir le mortier injecté derrière.

Bref, l'invention, telle que revendiquée ci-dessus, a consisté, peut-être moins à perfectionner le système du document EP-A-0394189, qu'à considérer, au vu de ce document, un tamis de scellement classique et à lui appliquer, de façon non évidente, un parapluie de l'art antérieur pour lui faire jouer un rôle d'enveloppe.

L'invention sera mieux comprise à l'aide de la description suivante de plusieurs exemples de réalisation du système de l'invention, en référence au dessin annexé, sur lequel
- la figure 1 est une vue en perspective d'un premier exemple de réalisation du système de l'invention ;
- la figure 2 est une vue en perspective de l'élément de rappel du système de la figure 1 ;
- la figure 3 est une vue en perspective d'une variante de réalisation de l'élément de rappel ;
- la figure 4 est une vue en partie en coupe du système des figures 1-3 en position de scellement ;
- la figure 5 est une vue en perspective d'un second exemple de réalisation du système de l'invention ;
- la figure 6 est une vue en perspective de la douille du système de la figure 5 ;
- la figure 7 est une vue en perspective de l'embout de positionnement, d'injection, de protection et de dégagement associé au système de la figure 5 et
- la figure 8 est une vue schématique en coupe de l'embout et de la douille du système de la figure 5, illustrant l'utilisation de l'embout.

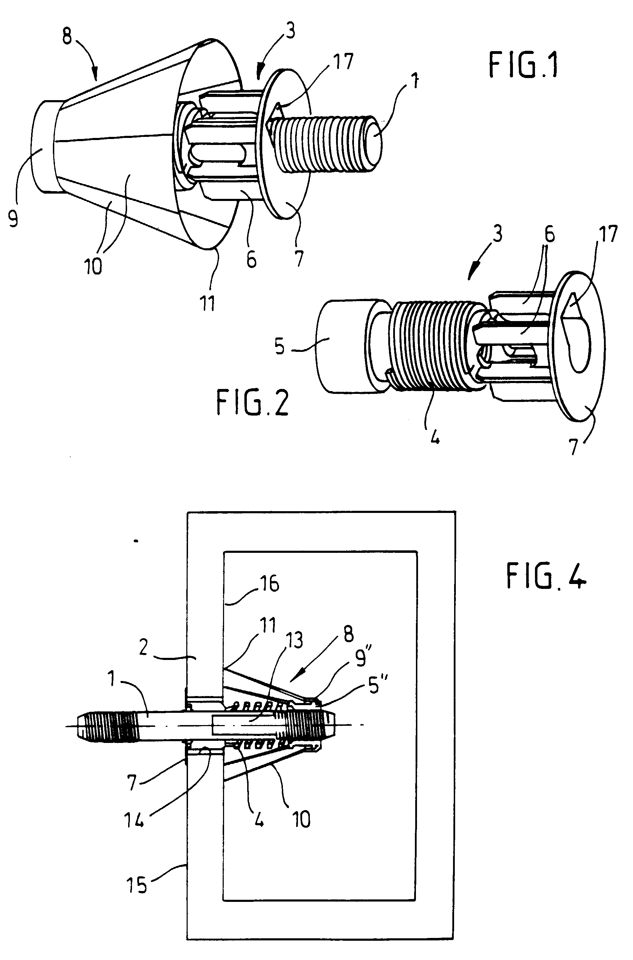

Le système de scellement chimique, dans sa réalisation des figures 1 et 2, est destiné au scellement d'une tige filetée 1 dans un matériau creux à paroi extérieure 2, ici une brique. Le système comporte, outre la tige 1, un élément de rappel monobloc 3, de forme générale tubulaire, comprenant un ressort de rappel 4 duquel sont solidaires, d'un côté, une douille 5 de réception de la tige 1 et, de l'autre côté, par l'intermédiaire de nervures axiales 6, une collerette d'appui 7.

Le système comporte encore une gaine-enveloppe 8 comprenant un manchon d'extrémité 9 auquel sont attachées et articulées de façon élastique des lames, ou plaques, flexibles 10 de forme ici trapézoïdale et qui peuvent donc être reployées ou, à l'état de repos, déployée en parapluie, avec un évasement dans la direction de leurs bords libres 11.

La gaine 8 est montée, par son manchon 9, sur la douille 5.

La collerette 7 est pourvue d'une lumière 17 de passage d'un embout d'injection de mortier de résine.

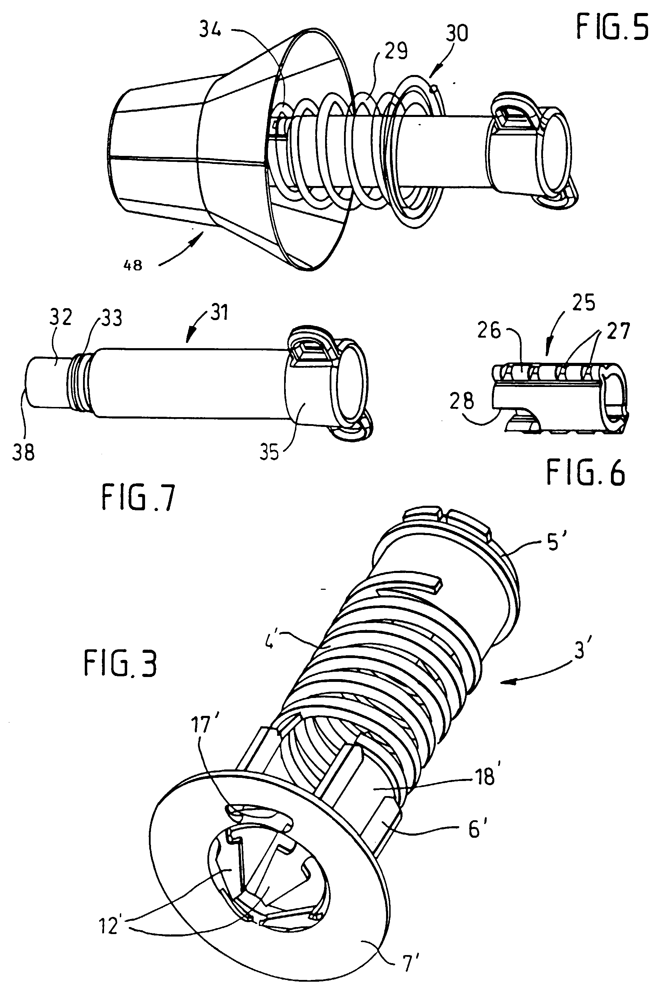

Le manchon 9 de la gaine-enveloppe 8 peut être monté à force sur la douille 5. Il pourrait aussi s'agir d'un montage à baïonnette, comme avec la douille 5' de l'élément de rappel 3' de la figure 3. Le manchon de gaine 9'' pourrait également être clipsé sur la douille 5'' du système de la figure 4.

La douille 5 est intérieurement pourvue d'un taraudage de coopération avec le filetage de la tige 1, comme représenté sur la figure 4. En variante, la paroi interne de la douille pourrait ne porter, sorties de moule, que des nervures axiales dans lesquelles la tige filetée elle-même réaliserait le taraudage.

L'élément de rappel est monobloc, c'est-à-dire qu'il a été réalisé par une seule injection dans un moule. Il est alors facile d'adapter le taraudage intérieur de la douille d'extrémité à différents diamètres de tige filetée par des tiroirs appropriés, sans changer les autres parties du moule. Dans ce cas, on prévoit, au niveau de la collerette 7', des ailettes de centrage 12' (figure 3) de diamètre de passage adaptable à celui de la tige filetée.

La gaine-enveloppe 8 est une gaine fendue à plaques quasiment jointives. On pourrait aussi, au lieu d'une gaine quasi-continue, envisager une gaine continue constituée d'une toile.

Pour éviter que le vissage d'un écrou sur la partie de tige filetée en saillie, pour la fixation d'une pièce à la tige une fois scellée, ne provoque une rotation de la tige dans le scellement, la tige est pourvue de moyens anti-rotation ou d'ancrage. Il peut s'agir d'un méplat 13, comme sur la tige du système de la figure 4. Plus généralement, la tige sera conformée pour présenter, au moins sur une partie de sa longueur, une section non circulaire, par exemple triangulaire, rectangulaire, cruciforme ....

La section de passage entre les nervures 6 est plus grande que le diamètre de la tige 1, la tige 1 s'étendant librement à l'intérieur de l'élément de rappel 3, sauf dans la douille 5 avec laquelle elle coopère. Les nervures 6' de l'élément de la figure 3 sont rapportées sur une portion de manchon 18' mais dont le diamètre intérieur reste plus grand que le diamètre de la tige 1 sur laquelle il peut librement coulisser.

L'utilisation du système s'effectue de la manière suivante, en référence à la figure 4.

On l'engage, par poussée, à travers un orifice 14 préalablement percé dans la paroi 2, la gaine se reployant au contact des bords de l'orifice, jusqu'à ce que
- la collerette 7 vienne en appui contre la face extérieure 15 et
- les plaques 10 passent totalement de l'autre côté de la paroi, quitte, à l'aide de la tige filetée 1, à tendre le ressort 4 pour cela.

On notera, à cet égard, que le ressort permet d'utiliser le système pour des parois d'épaisseurs différentes.

Dès la paroi 2 franchie, la gaine 8 se déploie élastiquement à l'état de repos et, sous l'action du ressort 4, les plaques 10 de la gaine, avec la tige 1, sont repoussées en position de scellement, avec leurs bords 11 en butée contre la face intérieure 16 de la paroi 2.

On remarquera que les nervures 6 constituent un moyen de centrage du système de scellement dans l'orifce 14 de la paroi 2.

On règle ensuite la longueur de la portion de la tige 1 devant faire saillie à l'extérieur de la paroi, par vissage ou dévissage de la tige dans la douille 5". Puis, par la lumière 17 de la collerette 7, on introduit l'embout d'injection et on injecte un mortier de résine qui s'écoule entre les nervures 6 et dans l'espace délimité par les plaques 10 de la gaine-enveloppe 8 et on laisse durcir le mortier de résine avant de fixer la pièce à la tige. La tige est scellée par accrochage du mortier de résine dans les filets du filetage de la tige.

Le système de scellement tel qu'il vient d'être décrit s'apparente à une gaine ouverte vers la face intérieure de la paroi et pincée entre son fond et cette paroi. Grâce à cela, la gaine contient parfaitement le mortier de résine avant son durcissement, et quelle que soit sa viscosité. Par la pression d'injection et la pression exercée par la gaine, le mortier de résine adhère bien à la face intérieure de la paroi.

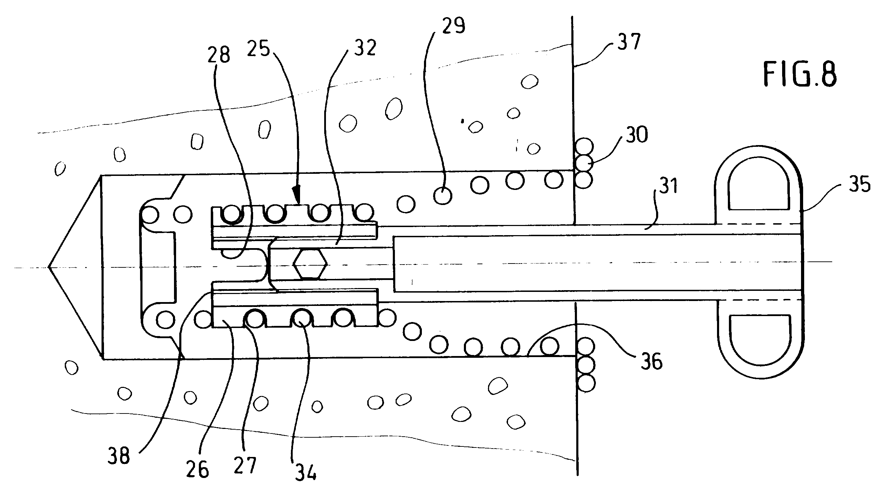

Dans sa réalisation des figures 5-8, le système de scellement comporte toujours une douille de fixation 25, particulière comme cela apparaîtra ci-après, sur laquelle est montée une gaine-enveloppe 48 , très similaire à celle de l'exemple de réalisation des figures 1-4.

La particularité de la douille 25 est d'avoir été formée à partir d'un flanc de tôle découpé et roulé. Elle comporte, dans un plan axial, deux nervures latérales d'ancrage 26, obtenues par pincement, et comportant, dans une série de plans radiaux, des découpes 27 constituant des portions de filetage. La douille 25 comporte encore une découpe latérale 28 d'écoulement du mortier de résine. Enfin, la douille 25 est intérieurement taraudée.

La gaine-enveloppe 48 est montée à baïonnette sur la douille 25 par ses portions de filetage. Dans cet exemple de réalisation, le système comporte, à titre de moyens de rappel, un ressort 29, "vissé", par une série de spires 34 d'une extrémité, sur la douille 25 et comprenant, à son autre extrémité, une série de spires élargies 30 destinées à faire fonction de collerette d'appui contre la face extérieure 15 de la paroi 2.

A la douille 25 est associé un embout tubulaire 31 à portion d'extrémité 32 de diamètre extérieur rétréci et en partie filetée 33 pour pouvoir être d'abord introduite dans la douille et ensuite vissée dedans de manière quasi-hermétique. A son autre extrémité, l'embout 31 porte ici une bague à anses de manoeuvre 35. La section intérieure de la portion rétrécie 32 de l'embout 31 n'est pas circulaire, elle est ici hexagonale, pour pouvoir assurer, après injection du mortier de résine, le dégagement de la colonne de mortier durci de la douille 25.

Les deux formes de réalisation du système de l'invention qui viennent d'être décrites peuvent être scellées aussi bien dans un matériau creux que dans un matériau plein, et, dans ce cas, certes imprévu, sans la gaine-enveloppe. Pour bien faire comprendre toute la portée de cette invention, il a été jugé plus intéressant de décrire l'utilisation de la deuxième forme de réalisation des figures 5-8 dans un matériau plein.

Bien entendu, son utilisation dans un matériau creux, pour ce qui concerne la douille et son embout associé, est quasiment identique.

Après avoir foré un trou de scellement 36 et démonté la gaine-enveloppe, on introduit le système dans le trou 36 juqu'à ce que les spires d'extrémité 30 du ressort 29 viennent en appui contre la surface 37 du matériau, le ressort 29, par ses spires adjacentes aux spires d'extrémité 30, maintenant le système convenablement centré dans le trou. Par l'extrémité de manoeuvre 35 de l'embout 31, on injecte un mortier de résine qui s'écoule à l'intérieur de l'embout et sort par la découpe 28 de la douille 25 pour se répandre dans le trou 36, entre la paroi du trou et la douille et l'embout.

Après durcissement du mortier, on dévisse l'embout 31, ce qui a pour effet de cisailler la colonne de mortier s'étendant à l'intérieur de l'embout au ras de l'extrémité 38 de la portion rétrécie 32 de l'embout. Après avoir sorti l'embout 31 du trou de scellement, le filetage intérieur de la douille ayant été protégé sur une longueur égale à celle de la portion rétrécie 32 de l'embout, on peut engager, dans le trou circulaire préservé par l'embout, une vis de fixation et la visser dans la douille.

## Revendications

1. Système de scellement chimique d'un élément de fixation dans un matériau creux à paroi extérieure (2), comprenant une gaine-enveloppe (8 ; 28) à conformation variable montée sur une douille (5 ; 25) à taraudage intérieur pour recevoir l'élément de fixation (1), la gaine étant agencée pour, dans un état reployé, traverser un orifice (14) percé dans la paroi extérieure (2) du matériau et, au-delà de l'orifice, dans une position de scellement et dans un état déployé, envelopper un mortier de résine durcissable, caractérisé par le fait que la gaine-enveloppe (8 ; 28) est agencée pour se déployer à l'état de repos élastiquement et, en position de scellement, être évasée vers la paroi extérieure (2) et en butée contre sa face intérieure (16) sous l'action
de moyens de rappel (4 ; 29) solidaires de la douille (5 ; 25) et
de moyens (7 ; 30) d'appui contre la face extérieure (15) de la paroi extérieure (2), solidaires des moyens de rappel (4 ; 29).

2. Système selon la revendication 1, dans lequel une tige filetée (1) de fixation est vissée dans la douille (5) pour être scellée.

3. Système selon la revendication 2, dans lequel les moyens d'appui contre la face extérieure (15) de la paroi extérieure (2) comportent une collerette (7) pourvue d'une lumière (17) de passage d'un embout d'injection de mortier de résine.

4. Système selon la revendication 3, dans lequel la collerette d'appui (7') comporte des ailettes (12') de centrage de tige filetée de diamètre de passage adaptable à celui de la tige filetée (1).

## Patentansprüche

1. System zur chemischen Versiegelung eines Befestigungselements in einem hohlen Material mit Außenwand (2), mit einem Hülsengehäuse (8; 28) mit variabler Verformung, das an einer Buchse (5; 25) mit Innengewinde zur Aufnahme des Befestigungselements (1) angebracht ist, wobei die Hülse derart angeordnet ist, daß sie im eingeklappten Zustand eine in die Außenwand (2) des Materials gebohrte Öffnung (14) durchdringen und über die Öffnung hinaus in einer Versiegelungsposition gelangen und im entfalteten Zustand einen Mörtel aus aushärtendem Harz umschließen kann, dadurch gekennzeichnet, daß das Hülsengehäuse (8; 28) derart angeordnet ist, daß es sich in der Ruhestellung elastisch entfaltet und in der Versiegelungsstellung zu der Außenwand (2) aufgeweitet und in Anlage gegen die Innenseite (16) ist, und zwar unter der Wirkung von
Rückstellmitteln (4; 29), die mit der Buchse (5; 25) fest verbunden sind, sowie von
Mitteln (7; 30) zur Anlage gegen die Außenseite (15) der Außenwand (2), die mit den Rückstellmitteln (4; 29) fest verbunden sind.

2. System nach Anspruch 1, bei dem ein Befestigungsgewindestift (1) zum Versiegeln in die Buchse (5) geschraubt ist.

3. System nach Anspruch 2, bei dem die Mittel zur Anlage gegen die Außenseite (15) der Außenwand (2) einen Flansch (7) aufweisen, der mit einem Schlitzloch (17) zum Durchgang eines Einspritzansatzes für Harzmörtel versehen ist.

4. System nach Anspruch 3, bei dem der Anlageflansch (7') Flügel (12') zum Zentrieren des Gewindestifts mit einem Durchgangsdurchmesser aufweist, der an denjenigen des Gewindestifts (1) angepaßt werden kann.

## Claims

1. System for chemical sealing of a fastening element in a hollow material with an outer wall (2), comprising a covering sheath (8; 28), which is variable in shape, mounted on a socket (5;25) with internal threading to receive the fastening element (1), the sheath being arranged in order in a folded state to pass through an aperture (14) pierced in the outer wall (2) of the material and, beyond the aperture, in a sealing position and in an opened out state,to cover a mortar of a resin which can be hardened, characterised in that the covering sheath (8;28) is arranged to open out elastically in the at-rest state and,in the sealing position,to be flared towards the outer wall (2) and in abutment against its inner face (16) under the action
of return means (4; 29) fast with the socket (5 ; 25) and
of means (7;30) bearing against the outer face (15) of the outer wall (2), fast with the return means (4, 29).

2. System according to claim 1, wherein a threaded fastening rod (1) is screwed into the socket (5) in order to be sealed.

3. System according to claim 2, wherein the means for bearing against the outer face (15) of the outer wall (2) comprise a collar (7) provided with an orifice (17) for passage of a nozzle for injection of the resin mortar.

4. System according to claim 3, wherein the bearing collar (7') comprises blades (12') for centring the threaded rod having a diameter of passage which can be adapted to that of the threaded rod (1).
